# EUROPEAN PATENT APPLICATION

(11) **EP 2 770 771 A1**
(43) Date of publication of application: **27.08.2014**
(21) Application number: 12847903.7
(22) Date of filing: 12.11.2012
(51) Int. Cl.: H04W 24/00

(54) **METHOD, BASE STATION, AND USER EQUIPMENT FOR MEASURING AND FEEDING BACK WIRELESS RESOURCE MANAGEMENT INFORMATION**

(30) Priority: 11.11.2011 CN 201110357505
(71) Applicant: Huawei Technologies Co., Ltd., Shenzhen, Guangdong 518129 (CN)
(72) Inventor: SUN, Jingyuan, Shenzhen Guangdong 518129 (CN); ZHOU, Yongxing, Shenzhen Guangdong 518129 (CN); XIA, Liang, Shenzhen Guangdong 518129 (CN); REN, Xiaotao, Shenzhen Guangdong 518129 (CN)
(74) Representative: Körber, Martin Hans
(86) International application number: PCT/CN2012/084451
(87) International publication number: WO 2013/067973

(57) **Abstract**

The present invention discloses a method for measuring and feeding back radio resource management information, a base station, and a user equipment, relates to the field of communications, and when a dynamic almost blank subframe exists in a cell, can acquire radio resource management information on resources used by the UE with low feedback overhead. The method includes: receiving, by a user equipment UE, a measurement indication from a base station, where the measurement indication includes: information used for indicating, to the UE, at least one channel-state information-reference signal CSI-RS resource used for measuring a received signal strength indicator RSSI; acquiring, by the UE, at least one RSSI according to the measurement indication; acquiring, by the UE, at least one reference signal received quality RSRQ according to the at least one RSSI, where the at least one RSRQ is one-to-one corresponding to the at least one RSSI; and feeding back, by the UE, the at least one RSRQ to the base station.

## Description

This application claims priority to Chinese Patent Application No. 201110357505.X, filed with the Chinese Patent Office on November 11, 2010 and entitled "METHOD FOR MEASURING AND FEEDING BACK RADIO RESOURCE MANAGEMENT INFORMATION, BASE STATION, AND USER EQUIPMENT", which is incorporated herein by reference in its entirety.

### TECHNICAL FIELD

The present invention relates to the field of communications, and in particular, to a method for measuring and feeding back radio resource management information, a base station, and a user equipment.

### BACKGROUND

In the prior art, an almost blank subframe technology (Almost blank subframe, ABS) is adopted to solve a problem of interferences between cells in networks including heterogeneous networks. An almost blank subframe refers to a subframe on which only a common channel and a cell-specific reference signal (Cell-specific Reference Signal, CRS) are sent and no other signals are sent. The almost blank subframe is defined as static or semi-static in a protocol, for example, it is defined that some subframes in a certain period are almost blank subframes while other frames are non-almost blank subframes. At this time, a UE may measure reference signal received power (Reference Signal Received Power, RSRP), received signal strength indicator (Received Signal Strength Indicator, RSSI), and reference signal received quality (Reference Signal Received Quality, RSRQ) on the two types of subframes respectively, and feed back measured information to a base station.

The base station obtains a signal interference degree on a corresponding subframe according to the received RSRP and RSRQ. In a system using a semi-static ABS, a base station selects a node (cell) for serving a UE and allocates resources according to RSRQs (which may be used as a reference of data received quality) measured by a user on different types of subframes.

When a dynamic almost blank subframe exists in a cell, a UE cannot acquire a corresponding position of the almost blank subframe, and therefore cannot effectively measure and feed back an RSRP and RSRQ on a subframe in a serving cell, where the subframe corresponds to the position of a dynamic almost blank subframe in an interfering neighbor cell. Moreover, if all RSRQs are fed back, high feedback overhead and complex calculation of a user are required.

In addition, when the UE feeds back the RSRP and RSRQ, in one information feedback unit, only one RSRQ can be simultaneously fed back when one RSRP is fed back, and to feed back more RSRQs, the UE needs to calculate more corresponding RSRPs and needs more information feedback units, thereby resulting in problems of increased calculation complexity, inflexible calculation, and high feedback overhead.

### SUMMARY

Embodiments of the present invention provide a method, an apparatus, and a device for measuring and feeding back radio resource management information, which can measure specific radio resource management information, for example, effectively measure and feed back radio resource management information on subframes in a serving cell, where the subframes correspond to the positions of a dynamic almost blank subframe and a dynamic non-almost blank subframe in an interfering neighbor cell, reduce feedback overhead and calculation complexity, and also save network resources.

In order to achieve the objective, the embodiments of the present invention adopt the following technical solutions:
A method for measuring and feeding back radio resource management information includes:
   receiving, by a user equipment UE, a measurement indication from a base station, where the measurement indication includes: information used for indicating, to the UE, at least one channel-state information-reference signal CSI-RS resource used for measuring a received signal strength indicator RSSI;
   acquiring, by the UE, at least one RSSI according to the measurement indication;
   acquiring, by the UE, at least one reference signal received quality RSRQ according to the at least one RSSI, where the at least one RSRQ is one-to-one corresponding to the at least one RSSI; and
   feeding back, by the UE, the at least one RSRQ to the base station.

Further, an embodiment of the present invention further adopts a method for measuring and feeding back radio resource management information, including:
sending, by a base station, a measurement indication to a user equipment UE, where the measurement indication includes: information used for indicating, to the UE, at least one channel-state information-reference signal CSI-RS resource used for measuring a received signal strength indicator RSSI; and
receiving, by the base station, at least one reference signal received quality RSRQ fed back by the UE, where the RSRQ is acquired by the UE according to the measurement indication.

Further, an embodiment of the present invention further adopts a method for measuring and feeding back radio resource management information, including:
acquiring, by a user equipment UE, configuration information;
determining, by the UE, according to the configuration information, the number of reference signal received qualities RSRQs that need to be correspondingly fed back when one reference signal received power RSRP is fed back and are to be acquired according to the one RSRP; and
feeding back, by the UE, the one RSRP and the RSRQs of the number acquired according to the one RSRP to the base station.

Further, an embodiment of the present invention further adopts a method for measuring and feeding back radio resource management information, including:
receiving, by a base station, one reference signal received power RSRP and at least one reference signal received quality RSRQ acquired according to the one RSRP, which are fed back by a user equipment UE; and
performing, by the base station, radio resource management according to the one RSRP and the at least one RSRQ.

A user equipment includes:
a first receiving unit, configured to receive a measurement indication from a base station, where the measurement indication includes: information used for indicating, to the UE, at least one channel-state information-reference signal CSI-RS resource used for measuring a received signal strength indicator RSSI;
a first acquiring unit, configured to acquire at least one RSSI according to the measurement indication received by the first receiving unit;
the first acquiring unit is further configured to acquire at least one reference signal received quality RSRQ according to the at least one RSSI, where the at least one RSRQ is one-to-one corresponding to the at least one RSSI; and
a first feedback unit, configured to feed back the at least one RSRQ acquired by the first acquiring unit to the base station.

Abase station includes:
a first sending unit, configured to send a measurement indication to a user equipment UE, where the measurement indication includes: information used for indicating, to the UE, at least one channel-state information-reference signal CSI-RS resource used for measuring a received signal strength indicator RSSI; and
a second receiving unit, configured to receive at least one reference signal received quality RSRQ fed back by the UE, where the RSRQ is acquired by the UE according to the measurement indication.

Further, an embodiment of the present invention further adopts a user equipment, including:
a second acquiring unit, configured to acquire configuration information;
a determination unit, configured to determine, according to the configuration information acquired by the second acquiring unit, the number of reference signal received qualities RSRQs that need to be correspondingly fed back when one reference signal received power RSRP is fed back and are to be acquired according to the one RSRP; and
a second feedback unit, configured to feed back the one RSRP and the RSRQs of the number acquired according to the one RSRP to the base station.

Further, an embodiment of the present invention further adopts a base station, including:
a third receiving unit, configured to receive one reference signal received power RSRP and at least one reference signal received quality RSRQ acquired according to the one RSRP, which are fed back by a user equipment UE; and
a management unit, configured to perform radio resource management according to the one RSRP and the at least one RSRQ that are received by the third receiving unit.

In the method, the apparatus, and the device for measuring and feeding back radio resource management information provided in the embodiments of the present invention, multiple RSSIs on multiple specific channel-state information-reference signal (Channel-State Information-Reference Signal, CSI-RS) resources can be measured according to the indication of the base station, and multiple RSRQs acquired according to the multiple RSSIs are fed back to the base station, thereby solving a problem in the prior art that, because the UE measures the RSSI and RSRP according to a position of a subframe delivered by the base station, the base station cannot acquire a position of a dynamic almost blank subframe in an interfering neighbor cell before using the dynamic almost blank subframe, which further causes that the radio resource management information cannot be effectively measured and fed back or excessively high calculation complexity and feedback overhead are required.

In addition, in the method for measuring and feeding back radio resource management information, the base station, and the user equipment provided in the embodiments of the present invention, in one information feedback unit, when one RSRP is fed back, multiple RSRQs acquired according to the RSRP can be fed back simultaneously, thereby reducing the calculation complexity and feedback overhead.

### BRIEF DESCRIPTION OF DRAWINGS

FIG. 1 is a flow chart of a method for measuring and feeding back radio resource management information according to Embodiment 1 of the present invention;
FIG. 2 is a flow chart of a method for measuring and feeding back radio resource management information according to Embodiment 2 of the present invention;
FIG. 3 is a flow chart of a method for measuring and feeding back radio resource management information according to Embodiment 3 of the present invention;
FIG. 4 is a flow chart of a method for measuring and feeding back radio resource management information according to Embodiment 4 of the present invention;
FIG. 5 is a flow chart of a method for measuring and feeding back radio resource management information according to Embodiment 5 of the present invention;
FIG. 6 is a flow chart of a method for measuring and feeding back radio resource management information according to Embodiment 7 of the present invention;
FIG. 7 is a schematic structural diagram of a user equipment according to Embodiment 8 of the present invention;
FIG. 8 is a schematic structural diagram of a base station according to Embodiment 9 of the present invention;
FIG. 9 is a schematic structural diagram of a user equipment according to Embodiment 10 of the present invention;
FIG. 10 is a schematic structural diagram of a user equipment according to Embodiment 10 of the present invention;
FIG. 11 is a schematic structural diagram of a user equipment according to Embodiment 10 of the present invention;
FIG. 12 is a schematic structural diagram of a base station according to Embodiment 11 of the present invention; and
FIG. 13 is a schematic structural diagram of a base station according to Embodiment 11 of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

The embodiments of the present invention are all described based on a heterogeneous network, which is taken as an example, which is not limited thereto in an actual application. In addition, an entity for executing the embodiments of the present invention is not limited to a UE or a base station, which is not limited by the present invention patent.

### Embodiment 1

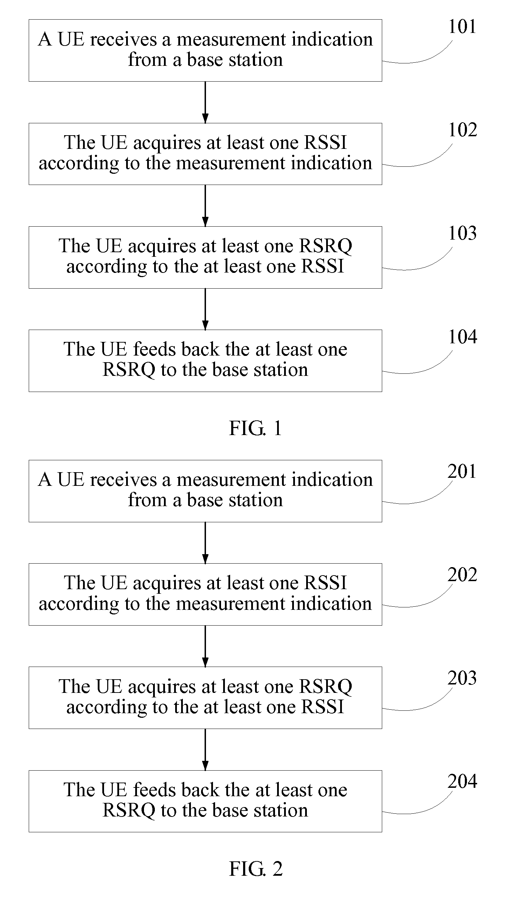

An embodiment of the present invention provides a method for measuring and feeding back radio resource management information. As shown in FIG. 1, the method includes the following steps.

101: A UE receives a measurement indication from a base station.

The measurement indication includes: information used for indicating, to the UE, at least one CSI-RS resource used for measuring an RSSI, where the number of pieces of the information about the resource in the measurement indication may be one or more.

Optionally, the measurement indication may be transmitted to the UE through high layer signaling such as radio resource control (Resource Radio Control, RRC) signaling.

102: The UE acquires at least one RSSI according to the measurement indication.

The UE measures an RSSI according to information about each CSI-RS resource in the measurement indication, so as to acquire one or more RSSIs.

In a measurement bandwidth, the UE may acquire received signal strengths on multiple resource elements (Resource Elements, REs) corresponding to one CSI-RS resource, then average the multiple received signal strengths measured on the CSI-RS resource, and take the average value as an RSSI measured on the CSI-RS resource. Alternatively, a received signal strength is measured multiple times on one CSI-RS resource, and an average value of the received signal strengths measured multiple times is taken as an RSSI. In an actual application, a manner of calculating the RSSI is not limited.

103: The UE acquires at least one RSRQ according to the at least one RSSI.

The UE calculates multiple RSRQs according to one acquired RSRP and multiple RSSIs, where the multiple RSSIs are obtained through measurement according to the measurement indication. The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in multiple RSSIs, and multiple RSRQs may be calculated according to multiple RSSIs and one RSRP, that is, multiple RSRQs are one-to-one corresponding to multiple RSSIs. In an actual application, a manner of acquiring the RSRQ according to the RSSI is not limited.

104: The UE feeds back the at least one RSRQ to the base station.

The UE feeds back the calculated multiple RSRQs to the base station.

Types of CSI-RS resource include a zero power CSI-RS and a non-zero power CSI-RS. When different configurations exist on corresponding CSI-RS resources in an interfering neighbor cell, a case may occur that RSSIs measured by the UE on multiple CSI-RS resources configured by the base station are different. In an actual application, the CSI-RS resource is not limited to the zero power CSI-RS and non-zero power CSI-RS.

In the method for measuring and feeding back radio resource management information provided in the embodiment of the present invention, multiple RSSIs on multiple specific CSI-RS resources may be obtained. In the prior art, an RSSI obtained by a UE on a cell-specific reference signal (Cell-specific Reference Signal, CRS) includes signals of all nodes, but a channel quality indicator (Channel Quality Indicator, CQI) fed back by the UE cannot take dynamic blanking Blanking of some nodes into account. In the method in the embodiment of the present invention, a signal to interference plus noise ratio (Signal to Interference plus Noise Ratio, SINR) corresponding to a case that some nodes are dynamic Blanking may be obtained, and is used for scheduling of the base station. In general, when it is assumed that a base station selects a CSI-RS resource on which a node is blanking and instructs the UE to measure an RSSI corresponding to the resource, a measured received signal does not include a signal generated by the corresponding node, so that the RSSI obtained according to the measurement indication does not include a signal part corresponding to the node. Therefore, the obtained RSSI may be expressed as the corresponding received signal of the UE when the corresponding node is blanking on a certain resource, and may be used as a basis for re-calculating the SINR of the UE on the corresponding resource. For example, according to the SINR corresponding to the CQI fed back by the UE, which is assumed as SINR_CQI, for an SINR sensed by a user when the corresponding node is blanking, reference may be made to SINR_CQI * (the RSSI obtained on the CRS - power corresponding to a node transmitting the signal)/(the corresponding RSSI measured according to the measurement indication - the power corresponding to the node transmitting the signal). The power corresponding to the node transmitting the signal may be obtained through adjustment according to the measured RSRP of the corresponding node and a ratio of the corresponding RSRP to data power.

In the method for measuring and feeding back radio resource management information provided in the embodiment of the present invention, multiple RSSIs on multiple specific CSI-RS resources can be measured according to the indication of the base station, and multiple RSRQs obtained according to the multiple RSSIs are fed back to the base station, thereby solving a problem in the prior art that, because the UE measures the RSSI and RSRP according to a position of a subframe delivered by the base station, the base station cannot acquire a position of a dynamic almost blank subframe in an interfering neighbor cell before using the dynamic almost blank subframe, which further causes that the radio resource management information cannot be effectively measured and fed back. In addition, calculation complexity of the UE is reduced, and feedback overhead is effectively controlled.

### Embodiment 2

An embodiment of the present invention provides a method for measuring and feeding back radio resource management information. As shown in FIG. 2, the method includes the following steps.

201: A UE receives a measurement indication from a base station.

The measurement indication includes: information used for indicating, to the UE, at least one CSI-RS resource used for measuring an RSSI, where the number of pieces of the information about the resource in the measurement indication may be one or more.

The measurement indication may be used for indicating on which one or more CSI-RS resources to measure an RSSI, or used for indicating on which one or more ports an RSSI is to be measured on a CSI-RS resource. One CSI-RS resource includes at least one port.

Optionally, the measurement indication may be transmitted to the UE through high layer signaling such as RRC signaling.

202: The UE acquires at least one RSSI according to the measurement indication.

The UE measures the RSSI according to information about each CSI-RS resource in the measurement indication, so as to acquire one or more RSSIs.

In a measurement bandwidth, the UE may acquire received signal strengths on multiple REs corresponding to one CSI-RS resource, then average the multiple received signal strengths measured on the CSI-RS resource, and take the average value as an RSSI measured on the CSI-RS resource. Alternatively, a received signal strength is measured multiple times on one CSI-RS resource, and an average value of the received signal strengths measured multiple times is taken as an RSSI. In an actual application, a manner of calculating the RSSI is not limited.

Optionally, when the measurement indication is to indicate measuring at least one port on a CSI-RS resource, in the measurement bandwidth, the UE may acquire at least one received signal strength on at least one RE corresponding to the at least one port corresponding to the CSI-RS resource, then average the at least one received signal strength, and take the average value as the measured RSSI. Alternatively, a received signal strength is measured multiple times on at least one RE corresponding to the at least one port corresponding to the CSI-RS resource, and an average value of the received signal strengths measured multiple times is taken as the RSSI. In an actual application, a manner of calculating the RSSI is not limited.

203: The UE acquires at least one RSRQ according to the at least one RSSI.

The UE calculates multiple RSRQs according to one acquired RSRP and multiple RSSIs, where the multiple RSSIs are obtained through measurement according to the measurement indication. The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in multiple RSSIs, and multiple RSRQs may be calculated according to multiple RSSIs and one RSRP, that is, multiple RSRQs are one-to-one corresponding to multiple RSSIs. In an actual application, a manner of acquiring the RSRQ according to the RSSI is not limited.

In the embodiment of the present invention, an example that five RSRQs are calculated according to an RSRP and five RSSIs measured on CSI-RS₁ to CSI-RS₅ is taken for description: RSRQ₁, RSRQ₂, RSRQ₃, RSRQ₄, and RSRQ₅ are calculated by respectively using RSSI₁ to RSSI₅ measured on CSI-RS₁ to CSI-RS₅ and the RSRP. In an actual application, multiple RSRQs may be calculated by using multiple RSSIs measured on multiple ports and one RSRP.

It should be noted that, an RSRQ is defined as a ratio of an RSRP to an RSSI. The RSRP is an average value of a usable signal received by the UE on a corresponding CSI-RS resource, the RSSI is an average value of all signals (including a usable signal and an interference signal) received by the UE on the corresponding CSI-RS resource, and the RSRQ is a ratio of the usable signal to all the signals. The base station may use the ratio as a reference of a channel quality indicator (Channel Quality Indicator, CQI) to reflect a channel state on the corresponding resource, but the CQI is not limited thereto.

204: The UE feeds back the at least one RSRQ to the base station.

The UE feeds back the calculated multiple RSRQs to the base station.

Multiple feedback manners are available: (1) the UE feeds back the RSRP and multiple calculated RSRQs to the base station; (2) the UE feeds back the RSRP and multiple RSSIs to the base station; and (3) the UE feeds back the RSRP, multiple RSSIs, and multiple calculated RSRQs to the base station, which are not limited in the embodiment of the present invention.

In addition, when feeding back the RSRP and/or the RSRQ and/or the RSSI, the UE may further feed back the information of the CSI-RS resource used for measurement.

Types of CSI-RS resource include a zero power CSI-RS and a non-zero power CSI-RS. When different configurations exist on corresponding CSI-RS resources in an interfering neighbor cell, a case may occur that RSSIs measured by the UE on multiple CSI-RS resources configured by the base station are different. In an actual application, the CSI-RS resource is not limited to the zero power CSI-RS and non-zero power CSI-RS.

In the method for measuring and feeding back radio resource management information provided in the embodiment of the present invention, multiple RSSIs and at least one RSRP can be measured on multiple CSI-RS resources or ports of a CSI-RS resource according to the measurement indication from the base station, and the multiple RSSIs and/or multiple RSRQs calculated according to the measured RSSIs and RSRP are fed back to the base station, so that the base station can obtain required RSSI information and RSRQ information, for example, for RSSI and RSRQ information of some nodes when blanking is used, it is only required to instruct the UE to measure an RSSI on a CSI-RS resource where such a corresponding node uses blanking. Moreover, the information measured on multiple ports of the CSI-RS resource is more accurate, and calculation complexity of the UE can also be effectively reduced. The present invention solves a problem in the prior art that, because the UE measures the RSSI and RSRP according to a position of a subframe delivered by the base station, when a dynamic almost blank subframe exists in a cell, specific and accurate radio resource management information cannot be effectively fed back with limited feedback overhead.

In addition, in the method for measuring and feeding back radio resource management information provided in the embodiment of the present invention, multiple RSSIs and at least one RSRP can be further measured on multiple CSI-RS resources or ports of a CSI-RS resource according to the measurement indication from the base station, and multiple RSRQs are calculated according to the measured multiple RSSIs and at least one RSRP, so that the information fed back provides more detailed resource interference information to the base station, and the base station may perform more precise assessment and control on resources in the cell, and effectively control the feedback overhead.

### Embodiment 3

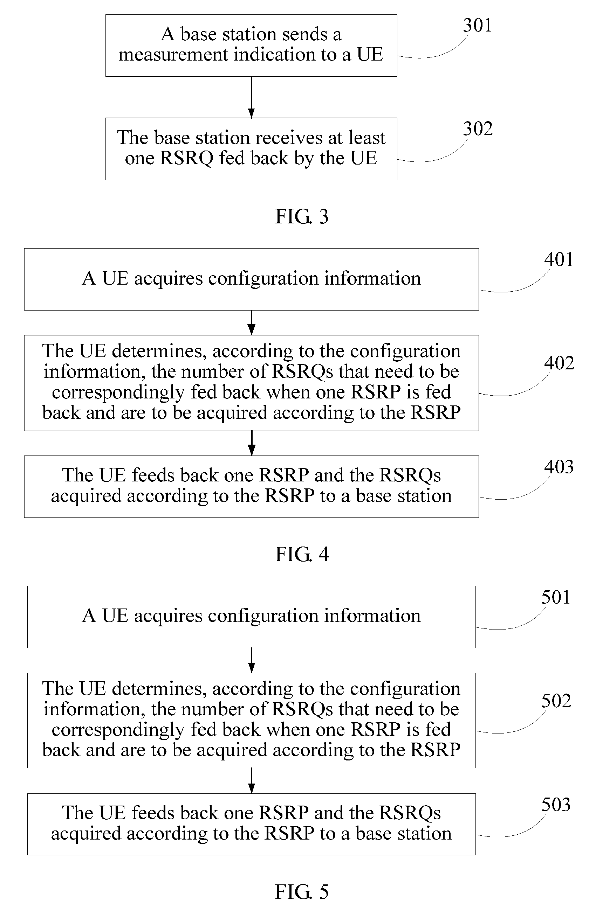

An embodiment of the present invention provides a method for measuring and feeding back radio resource management information. As shown in FIG. 3, the method includes the following steps.

301: A base station sends a measurement indication to a UE.

The measurement indication includes: information used for indicating, to the UE, at least one CSI-RS resource used for measuring an RSSI, where the number of pieces of the information about the resource in the measurement indication may be one or more.

The measurement indication may be used for indicating on which one or more CSI-RS resources to measure an RSSI, or used for indicating on which one or more ports an RSSI is to be measured on a CSI-RS resource. One CSI-RS resource includes at least one port.

Optionally, the measurement indication may be transmitted to the UE through high layer signaling such as RRC signaling.

302: The base station receives at least one RSRQ fed back by the UE.

The at least one RSRQ is calculated by using one RSRP and at least one RSSI, and is fed back to the base station by the UE.

That the UE acquires at least one RSSI may be specifically as follows:
Types of CSI-RS resource include a zero power CSI-RS and a non-zero power CSI-RS. When different configurations exist on corresponding CSI-RS resources in an interfering neighbor cell, a case may occur that RSSIs measured by the UE on multiple CSI-RS resources configured by the base station are different. In an actual application, the CSI-RS resource is not limited to the zero power CSI-RS and non-zero power CSI-RS.

The UE measures the RSSI according to information about each CSI-RS resource in the measurement indication, so as to acquire one or more RSSIs.

In a measurement bandwidth, the UE may acquire received signal strengths on multiple REs corresponding to one CSI-RS resource, then average the multiple received signal strengths measured on the CSI-RS resource, and take the average value as an RSSI measured on the CSI-RS resource. Alternatively, a received signal strength is measured multiple times on one CSI-RS resource, and an average value of the received signal strengths measured multiple times is taken as an RSSI. In an actual application, a manner of calculating the RSSI is not limited.

Optionally, when the measurement indication is to indicate measuring at least one port on a CSI-RS resource, in a measurement bandwidth, the UE may acquire at least one received signal strength on at least one RE corresponding to the at least one port corresponding to the CSI-RS resource, then average the at least one received signal strength, and take the average value as the measured RSSI. Alternatively, a received signal strength is measured multiple times on at least one RE corresponding to the at least one port corresponding to the CSI-RS resource, and an average value of the received signal strengths measured multiple times is taken as the RSSI. In an actual application, a manner of calculating the RSSI is not limited.

That the UE calculates at least one RSRQ according to one RSRP and at least one RSSI may be specifically as follows:
The UE calculates at least one RSRQ according to one RSRP and the obtained at least one RSSI. The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in the at least one RSSI, and at least one RSRQ may be calculated according to at least one RSSI and one RSRP, that is, multiple RSRQs are one-to-one corresponding to multiple RSSIs. In an actual application, a manner of acquiring the RSRQ according to the RSSI is not limited.

In the embodiment of the present invention, an example that five RSRQs are calculated according to an RSRP and five RSSIs measured on CSI-RS₁ to CSI-RS₅ is taken for description: RSRQ₁, RSRQ₂, RSRQ₃, RSRQ₄, and RSRQ₅ are calculated by respectively using RSSI₁ to RSSI₅ measured on CSI-RS₁ to CSI-RS₅ and the RSRP. In an actual application, multiple RSRQs may be calculated by using multiple RSSIs measured on multiple ports and one RSRP.

Multiple acquiring manners are available for the base station to acquire multiple RSRQs obtained by the UE, and specifically are: (1) the UE feeds back the RSRP and multiple calculated RSRQs to the base station; (2) the UE feeds back the RSRP and multiple RSSIs to the base station; and (3) the UE feeds back the RSRP, multiple RSSIs, and multiple calculated RSRQs to the base station, which are not limited in the embodiment of the present invention.

In the method for measuring and feeding back radio resource management information provided in the embodiment of the present invention, the base station can send the measurement indication to the UE, where the measurement indication is used for instructing the UE to measure multiple RSSIs and at least one RSRP on multiple CSI-RS resources or ports of a CSI-RS resource, and to feed back multiple RSSIs and/or multiple RSRQs calculated according to the measured RSSIs and the RSRP to the base station, so that the base station can obtain required RSSI information and RSRQ information, such as RSSI and RSRQ information of some nodes when blanking is used. Moreover, the information measured on multiple ports of the CSI-RS resource is more accurate, and calculation complexity of the UE can also be effectively reduced. The present invention solves a problem in the prior art that, because the UE measures the RSSI and RSRP according to a position of a subframe delivered by the base station, when a dynamic almost blank subframe exists in a cell, the base station cannot receive specific and accurate radio resource management information effectively fed back by the UE with limited feedback overhead.

In addition, in the method for measuring and feeding back radio resource management information provided in the embodiment of the present invention, the base station can further instruct, through the measurement indication, the UE to measure multiple RSSIs and at least one RSRP on multiple CSI-RS resources or ports of a CSI-RS resource, and calculate multiple RSRQs according to the measured multiple RSSIs and at least one RSRP, so that the information fed back provides more detailed resource interference information to the base station, and the base station may perform more precise assessment and control on resources in the cell, and effectively control the feedback overhead.

### Embodiment 4

An embodiment of the present invention provides a method for measuring and feeding back radio resource management information. As shown in FIG. 4, the method includes the following steps.

401: A UE acquires configuration information.

The configuration information includes: the number of RSRQs that need to be correspondingly fed back when one RSRP is fed back and are to be acquired according to the one RSRP, and the number of the RSRQs that need to be correspondingly fed back and are to be acquired according to the RSRP is at least one. The configuration information described in the embodiment of the present invention includes, but is not limited to, the limitation on the number of the RSRQs to be fed back.

402: The UE determines, according to the configuration information, the number of the RSRQs that need to be correspondingly fed back when one RSRP is fed back and are to be acquired according to the RSRP.

403: The UE feeds back one RSRP and RSRQs acquired according to the RSRP to a base station.

In the method for measuring and feeding back radio resource management information provided in the embodiment of the present invention, when feeding back one RSRP, the UE can further feed back multiple RSRQs corresponding to the RSRP to the base station. In the prior art, in one information feedback unit, when feeding back one RSRP, the UE can simultaneously feed back one RSRP at most, and the RSRQ can carry only one piece of RSSI information. When multiple pieces of RSRQ information or RSSI information are required, multiple corresponding pieces of RSRP information need to be calculated, so that multiple corresponding pieces of RSRQ information can be calculated and fed back, and more information feedback units are required. In the method in the embodiment of the present invention, it may be ensured that when one RSRP is fed back, multiple RSRQs corresponding to the RSRP are fed back, so that when one RSRP is fed back, multiple pieces of RSSI information or RSRQ information may be carried, thereby satisfying that the base station acquires, when only needing more RSSI information, required information when measures only one RSRP at least, reducing calculation complexity of the UE, increasing flexibility of calculation and feedback of the UE, and better satisfying a new feedback requirement when the base station only needs more RSSI or RSRQ information and feedback overhead is limited.

### Embodiment 5

An embodiment of the present invention provides a method for measuring and feeding back radio resource management information. As shown in FIG. 5, the method includes the following steps.

501: A UE acquires configuration information.

The configuration information includes: the number of RSRQs that need to be correspondingly fed back when one RSRP is fed back and are to be acquired according to the RSRP, and the number of the RSRQs that need to be correspondingly fed back and are to be acquired according to the RSRP is at least one. The configuration information described in the embodiment of the present invention includes, but is not limited to, the limitation on the number of the RSRQs to be fed back.

In addition, the types of the configuration information include: configuration information predefined in the UE and configuration information received by the UE from the base station. The configuration information received from the base station by the UE further includes explicitly noted configuration information or implicitly noted configuration information received from the base station. The explicitly noted configuration information may be that the base station directly instructs to the UE the number of RSRQs that need to be fed back when the UE feeds back one RSRP where the RSRQs are corresponding to the one RSRP. The implicitly noted configuration information may be information that is bound through a notification to the number of RSRQs that need to be fed back and correspond to an RSRP when one RSRP is fed back, where if the base station notifies such a type of information, the UE knows the number of RSRQs that need to be fed back when feeding back one RSRP where the RSRQs are corresponding to the one RSRP. In an actual application, the configuration information is not limited to the configuration information described in the foregoing, which is not limited in an actual application. Further, the configuration information may also exclude the number information, for example, may only include an absolute condition or a relative condition, which is not limited here.

Types of CSI-RS resource include a zero power CSI-RS and a non-zero power CSI-RS. When different configurations exist on corresponding CSI-RS resources in an interfering neighbor cell, a case may occur that RSSIs measured by the UE on multiple CSI-RS resources configured by the base station are different. In an actual application, the CSI-RS resource is not limited to the zero power CSI-RS and non-zero power CSI-RS.

Optionally, when one RSRP is fed back, the number of the RSRQs that need to be fed back and correspond to the RSRP may be one or more.

Further optionally, when the configuration information is the predefined configuration information, then when one RSRP is fed back, the number of RSRQs corresponding to the RSRP is further fed back.

The configuration information is not limited to the number information, and may further include an absolute condition or a relative condition that needs to be satisfied by the RSRQ fed back. The absolute condition may be that an absolute value of the RSRQ fed back needs to satisfy a certain threshold. The relative condition may be that a relative value between several RSRQs satisfies a certain condition, for example, a difference or ratio between two RSRQs is higher than a certain threshold. In addition, time dimension may be further added, for example, an RSRQ satisfies the feedback condition and needs to be fed back only when the RSRQ keeps satisfying the absolute condition or relative condition in a certain time scope. The configuration information is not limited to the number information in the embodiment of the present invention. Further, the configuration information may also exclude the number information, for example, may only include an absolute condition or a relative condition, which is not limited here.

502: The UE determines, according to the configuration information, the number of the RSRQs that need to be correspondingly fed back when one RSRP is fed back and are to be acquired according to the RSRP.

503: The UE feeds back one RSRP and RSRQs acquired according to the RSRP to the base station.

Multiple manners are available for the UE to acquire an RSRQ according to one RSRP, and one of the realizable application scenarios is as follows:
The UE calculates multiple RSRQs according to one acquired RSRP and multiple RSSIs, where the multiple RSSIs are obtained through measurement according to the measurement indication. The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in multiple RSSIs, and multiple RSRQs may be calculated according to multiple RSSIs and one RSRP, that is, multiple RSRQs are one-to-one corresponding to multiple RSSIs.

It should be understood that, the foregoing application scenario is one of the manners for acquiring an RSRQ according to an RSRP, and in an actual application, another acquiring manner that may achieve the same effects is further included, which is not limited in the embodiment of the present invention.

It should be understood that, the foregoing application scenario is one of the manners for acquiring an RSRQ according to an RSRP, and in an actual application, another acquiring manner that may achieve the same effects is further included, which is not limited in the embodiment of the present invention.

Further, the UE may measure an RSRP and an RSSI on a CRS, and may also measure an RSRP and an RSSI on at least one CSI-RS resource according to an indication of the base station, or measure on one or more ports on a CSI-RS resource according to an indication of the base station. A specific measurement manner is selected by an operator according to an operation requirement in an actual application, which is not limited here.

After acquiring one RSRP and multiple RSSIs, and calculating multiple RSRQs corresponding to the RSRP according to the one RSRP and multiple RSSIs, the UE feeds back the corresponding one RSRP and multiple RSRQs calculated according to the RSRP to the base station.

In addition, when feeding back the corresponding RSRQs, the UE may further feed back information about the resource on which each RSRQ is acquired to the base station. For example, when an RSRQ is calculated by using an RSRP and an RSSI, it may be fed back on which resource or which port of which resource the RSRP corresponding to one or more RSRQs is measured, and on which resource or which port of which resource an RSSI corresponding to each RSRQ in one or more RSRQs is measured.

In the method for measuring and feeding back radio resource management information provided in the embodiment of the present invention, when feeding back one RSRP, the UE can further feed back multiple RSRQs corresponding to the RSRP to the base station. In the prior art, in one information feedback unit, when feeding back one RSRP, the UE can simultaneously feed back one RSRP at most, and the RSRQ can carry only one piece of RSSI information. When multiple pieces of RSRQ information or RSSI information are required, multiple corresponding pieces of RSRP information need to be calculated, so that multiple corresponding pieces of RSRQ information can be calculated and fed back, and more information feedback units are required. In the method in the embodiment of the present invention, it may be ensured that when one RSRP is fed back, multiple RSRQs corresponding to the RSRP are fed back, so that when one RSRP is fed back, multiple pieces of RSSI information or RSRQ information may be carried, thereby satisfying that the base station acquires, when only needing more RSSI information, required information when measures only one RSRP at least, reducing calculation complexity of the UE, increasing flexibility of calculation and feedback of the UE, and better satisfying a new feedback requirement when the base station only needs more RSSI or RSRQ information and feedback overhead is limited.

### Embodiment 6

An embodiment of the present invention provides a method for measuring and feeding back radio resource management information. The method is specifically as follows:
A base station receives one RSRP and at least one RSRQ corresponding to the RSRP that are fed back by a UE. Multiple manners are available for the UE to acquire an RSRQ according to one RSRP. The base station may perform radio resource management according to the one RSRP and the at least one RSRQ corresponding to the RSRP that are fed back by the UE. A realizable application scenario is as follows:
   The UE calculates multiple RSRQs according to one acquired RSRP and multiple RSSIs, where the multiple RSSIs are obtained through measurement according to a measurement indication. The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in multiple RSSIs, and multiple RSRQs may be calculated according to multiple RSSIs and one RSRP, that is, multiple RSRQs are one-to-one corresponding to multiple RSSIs.

It should be understood that, the foregoing application scenario is one of the manners for acquiring an RSRQ according to an RSRP, and in an actual application, another acquiring manner that may achieve the same effects is further included, which is not limited in the embodiment of the present invention.

Further, the UE may measure an RSRP and an RSSI on a CRS, and may also measure an RSRP and an RSSI on at least one CSI-RS resource according to an indication of the base station, or measure on one or more ports on a CSI-RS resource according to an indication of the base station. A specific measurement manner is selected by an operator according to an operation requirement in an actual application.

After acquiring one RSRP and multiple RSSIs, and calculating multiple RSRQs corresponding to the RSRP according to the one RSRP and multiple RSSIs, the UE feeds back the corresponding one RSRP and multiple RSRQs calculated according to the RSRP to the base station.

In addition, when feeding back the corresponding RSRQs, the UE may further feed back information about a resource on which each RSRQ is acquired to the base station. For example, when an RSRQ is calculated by using an RSRP and an RSSI, it may be fed back on which resource or which port of which resource the RSRP corresponding to one or more RSRQs is measured, and on which resource or which port of which resource an RSSI corresponding to each RSRQ in one or more RSRQs is measured.

The one RSRP and the at least one RSRQ corresponding to the RSRP that are received by the base station and fed back by the UE are used for the base station to perform radio resource management.

In the method for measuring and feeding back radio resource management information provided in the embodiment of the present invention, when receiving one RSRP fed back by the UE, the base station can further receive multiple RSRQs corresponding to the RSRP and fed back by the UE. In the prior art, in one information feedback unit, when feeding back one RSRP, the UE can simultaneously feed back one RSRP at most, and the RSRQ can carry only one piece of RSSI information. When multiple pieces of RSRQ information or RSSI information are required, multiple corresponding pieces of RSRP information need to be calculated, so that multiple corresponding pieces of RSRQ information can be calculated and fed back, and more information feedback units are required. In the method in the embodiment of the present invention, it may be ensured that when receiving one RSRP, the base station can further receive multiple RSRQs corresponding to the RSRP, so that when one RSRP is received, multiple pieces of RSSI information or RSRQ information may be received, thereby satisfying that the base station acquires, when only needing more RSSI information, required information whenmeasures only one RSRP at least, reducing calculation complexity of the UE, increasing flexibility of calculation and feedback of the UE, and better satisfying a new feedback requirement when the base station only needs more RSSI or RSRQ information and feedback overhead is limited.

### Embodiment 7

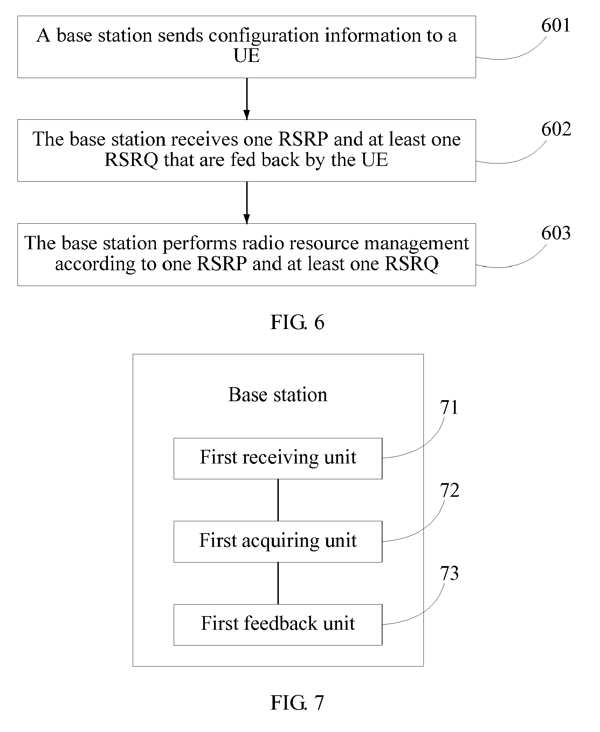

An embodiment of the present invention provides a method for measuring and feeding back radio resource management information. As shown in FIG. 6, the method includes the following steps.

601: A base station sends configuration information to a UE.

The configuration information includes: the number of RSRQs that need to be correspondingly acquired according to one RSRP when the one RSRP is fed back, where the number of the RSRQs that need to be correspondingly acquired according to the one RSRP is at least one. The configuration information described in the embodiment of the present invention includes, but is not limited to, the limitation on the number of the RSRQs to be fed back.

In addition, types of the configuration information include: configuration information predefined in the UE and configuration information received from the base station by the UE. The configuration information received from the base station by the UE further includes explicitly noted configuration information or implicitly noted configuration information received from the base station. The explicitly noted configuration information may be the number of RSRQs that need to be fed back and correspond to an RSRP when the base station directly instructs the UE to feed back one RSRP. The implicitly noted configuration information may be information that is bound through a notification to the number of RSRQs that need to be fed back and correspond to an RSRP when one RSRP is fed back, where if the base station notifies such a type of information, the UE knows the number of RSRQs that need to be fed back and correspond to one RSRP when feeding back the one RSRP. In an actual application, the configuration information is not limited to the configuration information described in the foregoing, which is not limited in an actual application.

Types of CSI-RS resource include a zero power CSI-RS and a non-zero power CSI-RS. When different configurations exist on corresponding CSI-RS resources in an interfering neighbor cell, a case may occur that RSSIs measured by the UE on multiple CSI-RS resources configured by the base station are different. In an actual application, the CSI-RS resource is not limited to the zero power CSI-RS and non-zero power CSI-RS.

Optionally, when one RSRP is fed back, the number of the RSRQs that need to be fed back and correspond to the RSRP may be one or more.

Further optionally, when the configuration information is the predefined configuration information, and when one RSRP is fed back, the number of RSRQs corresponding to the RSRP may be further fed back.

The configuration information is not limited to the number information, and may further include an absolute condition or a relative condition that needs to be satisfied by the RSRQ fed back. The absolute condition may be that an absolute value of the RSRQ fed back needs to satisfy a certain threshold. The relative condition may be that a relative value between several RSRQs satisfies a certain condition, for example, a difference or ratio between two RSRQs is higher than a certain threshold. In addition, time dimension may be further added, for example, an RSRQ satisfies the feedback condition and needs to be fed back only when the RSRQ keeps satisfying the absolute condition or relative condition in a certain time scope. The configuration information is not limited to the number information in the embodiment of the present invention. In an actual application, the configuration information may also exclude the number information, for example, may only include an absolute condition or a relative condition, which is not limited here.

602: The base station receives one RSRP and at least one RSRQ that are fed back by the UE.

Multiple manners are available for the UE to acquire an RSRQ according to one RSRP, and one of the realizable application scenarios is as follows:
The UE calculates multiple RSRQs according to one acquired RSRP and multiple RSSIs, where the multiple RSSIs are obtained through measurement according to a measurement indication. The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in multiple RSSIs, and multiple RSRQs may be calculated according to multiple RSSIs and one RSRP, that is, multiple RSRQs are one-to-one corresponding to multiple RSSIs. That is not limited in the embodiment of the present invention.

It should be understood that, the foregoing application scenario is one of the manners for acquiring an RSRQ according to an RSRP, and in an actual application, another acquiring manner that may achieve the same effects is further included, which is not limited in the embodiment of the present invention.

Further, the UE may measure an RSRP and an RSSI on a CRS, and may also measure an RSRP and an RSSI on at least one CSI-RS resource according to an indication of the base station, or measure on one or more ports on a CSI-RS resource according to an indication of the base station. A specific measurement manner is selected by an operator according to an operation requirement in an actual application.

After acquiring one RSRP and multiple RSSIs, and calculating multiple RSRQs corresponding to the RSRP according to the one RSRP and multiple RSSIs, the UE feeds back the corresponding one RSRP and multiple RSRQs calculated according to the RSRP to the base station.

In addition, when feeding back the corresponding RSRQs, the UE may further feed back information about a resource on which each RSRQ is acquired to the base station. For example, when an RSRQ is calculated by using an RSRP and an RSSI, it may be fed back on which resource or which port of which resource the RSRP corresponding to one or more RSRQs is measured, and on which resource or which port of which resource an RSSI corresponding to each RSRQ in one or more RSRQs is measured.

603: The base station performs radio resource management according to the one RSRP and the at least one RSRQ.

In the method for measuring and feeding back radio resource management information provided in the embodiment of the present invention, when receiving one RSRP fed back by the UE, the base station can further receive multiple RSRQs corresponding to the RSRP and fed back by the UE. In the prior art, in one information feedback unit, when feeding back one RSRP, the UE can simultaneously feed back one RSRP at most, and the RSRQ can carry only one piece of RSSI information. When multiple pieces of RSRQ information or RSSI information are required, multiple corresponding pieces of RSRP information need to be calculated, so that multiple corresponding pieces of RSRQ information can be calculated and fed back, and more information feedback units are required. In the method in the embodiment of the present invention, it may be ensured that when receiving one RSRP, the base station can further receive multiple RSRQs corresponding to the RSRP, so that when one RSRP is received, multiple pieces of RSSI information or RSRQ information may be received, thereby satisfying that the base station acquires, when only needing more RSSI information, required information when measures only one RSRP at least, reducing calculation complexity of the UE, increasing flexibility of calculation and feedback of the UE, and better satisfying a new feedback requirement when the base station only needs more RSSI or RSRQ information and feedback overhead is limited.

### Embodiment 8

An embodiment of the present invention provides a user equipment UE. As shown in FIG. 7, the UE includes: a first receiving unit 71, a first acquiring unit 72, and a first feedback unit 73.

The first receiving unit 71 is configured to receive a measurement indication from a base station, where the measurement indication includes: information used for indicating, to the UE, at least one CSI-RS resource used for measuring an RSSI.

The measurement indication includes: information used for indicating, to the UE, at least one CSI-RS resource used for measuring an RSSI, where the number of pieces of the information about the resource in the measurement indication may be one or more.

The measurement indication may be used for indicating on which one or more CSI-RS resources to measure an RSSI, or used for indicating on which one or more ports an RSSI is to be measured on a CSI-RS resource. One CSI-RS resource includes at least one port.

Optionally, the measurement indication may be transmitted to the UE through high layer signaling such as RRC signaling.

The first acquiring unit 72 is configured to acquire at least one RSSI according to the measurement indication received by the first receiving unit 71.

The first acquiring unit 72 measures the RSSI according to information about each CSI-RS resource in the measurement indication, so as to acquire one or more RSSIs.

Types of CSI-RS resource include a zero power CSI-RS and a non-zero power CSI-RS. When different configurations exist on corresponding CSI-RS resources in an interfering neighbor cell, a case may occur that RSSIs measured by the UE on multiple CSI-RS resources configured by the base station are different. In an actual application, the CSI-RS resource is not limited to the zero power CSI-RS and non-zero power CSI-RS.

The first acquiring unit 72 measures the RSSI according to information about each CSI-RS resource in the measurement indication, so as to acquire one or more RSSIs.

In a measurement bandwidth, the first acquiring unit 72 may acquire received signal strengths on multiple REs corresponding to one CSI-RS resource, then average the multiple received signal strengths measured on the CSI-RS resource, and take the average value as an RSSI measured on the CSI-RS resource. Alternatively, a received signal strength is measured multiple times on one CSI-RS resource, and an average value of the received signal strengths measured multiple times is taken as an RSSI. In an actual application, a manner of calculating the RSSI is not limited.

The first acquiring unit 72 is further configured to acquire at least one RSRQ according to the at least one RSSI, where the at least one RSRQ is one-to-one corresponding to the at least one RSSI.

The first acquiring unit 72 calculates multiple RSRQs according to one acquired RSRP and multiple RSSIs, where the multiple RSSIs are obtained through measurement according to the measurement indication. The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in multiple RSSIs, and multiple RSRQs may be calculated according to multiple RSSIs and one RSRP, that is, multiple RSRQs are one-to-one corresponding to multiple RSSIs. In an actual application, a manner of acquiring the RSRQ according to the RSSI is not limited.

The first feedback unit 73 is configured to feed back the at least one RSRQ acquired by the first acquiring unit 72 to the base station.

Multiple feedback manners are available: (1) the first feedback unit 73 feeds back the RSRP and multiple calculated RSRQs to the base station; (2) the first feedback unit 73 feeds back the RSRP and multiple RSSIs to the base station; and (3) the first feedback unit 73 feeds back the RSRP, multiple RSSIs, and multiple calculated RSRQs to the base station, which are not limited in the embodiment of the present invention.

In addition, when feeding back the RSRP and/or the RSRQ and/or the RSSI, the first feedback unit 73 may further feed back the information of the CSI-RS resource used for measurement.

Further, the first acquiring unit 72 is specifically configured to measure at least one RSSI on each CSI-RS resource in the at least one CSI-RS resource, so as to obtain the at least one RSSI.

Further, the measurement indication received by the first receiving unit 71 further includes: information used for indicating, to the UE, at least one port of the at least one CSI-RS resource for which an RSSI needs to be measured, where one CSI-RS resource at least includes one port.

The first acquiring unit 72 is further configured to measure an RSSI on the at least one port on the at least one CSI-RS resource according to the measurement indication.

When the measurement indication is to indicate measuring at least one port on a CSI-RS resource, in the measurement bandwidth, the first acquiring unit 72 may acquire at least one received signal strength on at least one RE corresponding to the at least one port corresponding to the CSI-RS resource, then average the at least one received signal strength, and take the average value as the measured RSSI. Alternatively, a received signal strength is measured multiple times on at least one RE corresponding to the at least one port corresponding to the CSI-RS resource, and an average value of the received signal strengths measured multiple times is taken as the RSSI. In an actual application, a manner of calculating the RSSI is not limited.

Further, the first acquiring unit 72 is specifically configured to calculate one RSRQ according to each RSSI in the at least one RSSI and one RSRP acquired by the first acquiring unit 72, so as to acquire the at least one RSRQ.

The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in multiple RSSIs, and multiple RSRQs may be calculated according to multiple RSSIs and one RSRP, that is, multiple RSRQs are one-to-one corresponding to multiple RSSIs. In an actual application, a manner of acquiring the RSRQ according to the RSSI is not limited.

In the embodiment of the present invention, an example that five RSRQs are calculated according to an RSRP and five RSSIs measured on CSI-RS₁ to CSI-RS₅ is taken for description: the first acquiring unit 72 calculates RSRQ₁, RSRQ₂, RSRQ₃, RSRQ₄, and RSRQ₅ by respectively using RSSI₁ to RSSI₅ measured on CSI-RS₁ to CSI-RS₅ and the RSRP. In an actual application, multiple RSRQs may be calculated by using multiple RSSIs measured on multiple ports and one RSRP.

It should be noted that, an RSRQ is defined as a ratio of an RSRP to an RSSI. The RSRP is an average value of a usable signal received by the first acquiring unit 72 on a corresponding CSI-RS resource, the RSSI is an average value of all signals (including a usable signal and an interference signal) received by the first acquiring unit 72 on the corresponding CSI-RS resource, and the RSRQ is a ratio of the usable signal to all the signals. The base station may use the ratio as a reference of a CQI to reflect a channel state on the corresponding resource, but the CQI is not limited thereto.

The user equipment provided in the embodiment of the present invention can measure multiple RSSIs and at least one RSRP on multiple CSI-RS resources or ports of a CSI-RS resource according to the measurement indication of the base station, and feed back multiple RSSIs and/or multiple RSRQs calculated according to the measured RSSIs and the RSRP to the base station, so that the base station can obtain required RSSI information and RSRQ information, such as RSSI and RSRQ information of some nodes when blanking is used. Moreover, the information measured on multiple ports of the CSI-RS resource is more accurate, and calculation complexity of the UE can also be effectively reduced. The present invention solves a problem in the prior art that, because the UE measures the RSSI and RSRP according to a position of a subframe delivered by the base station, when a dynamic almost blank subframe exists in a cell, specific and accurate radio resource management information cannot be effectively fed back with limited feedback overhead.

In addition, the user equipment provided in the embodiment of the present invention can further measure multiple RSSIs and at least one RSRP on multiple CSI-RS resources or ports of a CSI-RS resource according to the measurement indication from the base station, and calculate multiple RSRQs according to the measured multiple RSSIs and at least one RSRP, so that the information fed back provides more detailed resource interference information to the base station, and the base station may perform more precise assessment and control on resources in the cell, and effectively control the feedback overhead.

### Embodiment 9

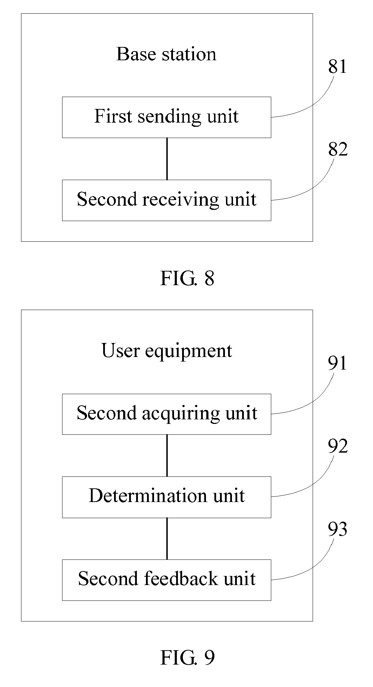

An embodiment of the present invention provides a base station. As shown in FIG. 8, the base station includes: a first sending unit 81 and a second receiving unit 82.

The first sending unit 81 is configured to send a measurement indication to a UE, where the measurement indication includes: information used for indicating, to the UE, at least one CSI-RS resource used for measuring an RSSI.

The measurement indication includes: information used for indicating, to the UE, at least one CSI-RS resource used for measuring an RSSI, where the number of pieces of the information about the resource in the measurement indication may be one or more.

Specifically, the measurement indication may be used for indicating on which one or more CSI-RS resources to measure an RSSI, or used for indicating on which one or more ports an RSSI is to be measured on a CSI-RS resource. One CSI-RS resource includes at least one port.

Optionally, the measurement indication may be transmitted to the UE through high layer signaling such as RRC signaling.

The second receiving unit 82 is used for receiving at least one RSRQ fed back by the UE, where the RSRQ is acquired by the UE according to the measurement indication.

Multiple acquiring manners are available for the second receiving unit 82 to acquire multiple RSRQs obtained by the UE, and specifically are: (1) the second receiving unit 82 acquires the RSRP obtained and multiple RSRQs calculated by the UE; (2) the second receiving unit 82 acquires the RSRP and multiple RSSIs that are obtained by the UE; and (3) the second receiving unit 82 acquires the RSRP and multiple RSSIs obtained and multiple RSRQs calculated by the UE, which are not limited in the embodiment of the present invention.

Further, the measurement indication sent by the first sending unit 81 further includes: information used for indicating, to the UE, at least one port of the at least one CSI-RS resource for which an RSSI needs to be measured, where one CSI-RS resource at least includes one port.

The base station provided in the embodiment of the present invention can send the measurement indication to the UE, where the measurement indication is used for instructing the UE to measure multiple RSSIs and at least one RSRP on multiple CSI-RS resources or ports of a CSI-RS resource, and to feed back multiple RSSIs and/or multiple RSRQs calculated according to the measured RSSIs and the RSRP to the base station, so that the base station can obtain required RSSI information and RSRQ information, such as RSSI and RSRQ information of some nodes when blanking is used. Moreover, the information measured on multiple ports of the CSI-RS resource is more accurate, and calculation complexity of the UE can also be effectively reduced. The present invention solves a problem in the prior art that, because the UE measures the RSSI and RSRP according to a position of a subframe delivered by the base station, when a dynamic almost blank subframe exists in a cell, the base station cannot receive specific and accurate radio resource management information effectively fed back by the UE with limited feedback overhead.

In addition, the base station provided in the embodiment of the present invention can further instruct, through the measurement indication, the UE, to measure multiple RSSIs and at least one RSRP on multiple CSI-RS resources or ports of a CSI-RS resource, and calculate multiple RSRQs according to the measured multiple RSSIs and at least one RSRP, so that the information fed back provides more detailed resource interference information to the base station, and the base station may perform more precise assessment and control on resources in the cell, and effectively control the feedback overhead.

### Embodiment 10

An embodiment of the present invention provides a user equipment UE. As shown in FIG. 9, the UE includes: a second acquiring unit 91, a determination unit 92, and a second feedback unit 93.

The second acquiring unit 91 is configured to acquire configuration information.

The configuration information includes: the number of RSRQs that need to be correspondingly fed back when one RSRP is fed back and are to be acquired according to the RSRP, and the number of the RSRQs that need to be correspondingly fed back and are to be acquired according to the RSRP is at least one. The configuration information described in the embodiment of the present invention includes, but is not limited to, the limitation on the number of the RSRQs to be fed back.

Types of the configuration information include: configuration information predefined in the UE and configuration information received by the second acquiring unit 91 from the base station. The configuration information received by the second acquiring unit 91 from the base station further includes explicitly noted configuration information or implicitly noted configuration information received from the base station. The explicitly noted configuration information may be the number of RSRQs that need to be fed back and correspond to an RSRP when the base station directly instructs the UE to feed back one RSRP. The implicitly noted configuration information may be information that is bound through a notification to the number of RSRQs that need to be fed back and correspond to an RSRP when one RSRP is fed back, where if the base station notifies such a type of information, the UE knows the number of RSRQs that need to be fed back and correspond to one RSRP when feeding back the one RSRP. In an actual application, the configuration information is not limited to the configuration information described in the foregoing, which is not limited in an actual application. Further, the configuration information may also exclude the number information, for example, may only include an absolute condition or a relative condition, which is not limited here.

Types of CSI-RS resource include a zero power CSI-RS and a non-zero power CSI-RS. When different configurations exist on corresponding CSI-RS resources in an interfering neighbor cell, a case may occur that RSSIs measured by the UE on multiple CSI-RS resources configured by the base station are different. In an actual application, the CSI-RS resource is not limited to the zero power CSI-RS and non-zero power CSI-RS.

Further, the configuration information is not limited to the number information, and may further include an absolute condition or a relative condition that needs to be satisfied by the RSRQ fed back. The absolute condition may be that an absolute value of the RSRQ fed back needs to satisfy a certain threshold. The relative condition may be that a relative value between several RSRQs satisfies a certain condition, for example, a difference or ratio between two RSRQs is higher than a certain threshold. In addition, time dimension may be further added, for example, an RSRQ satisfies the feedback condition and needs to be fed back only when the RSRQ keeps satisfying the absolute condition or relative condition in a certain time scope. The configuration information is not limited to the number information in the embodiment of the present invention. Further, the configuration information may also exclude the number information, for example, may only include an absolute condition or a relative condition, which is not limited here.

The determination unit 92 is configured to determine, according to the configuration information acquired by the second acquiring unit 91, the number of the RSRQs that need to be correspondingly fed back when one RSRP is fed back and are to be acquired according to the RSRP.

The second feedback unit 93 is configured to feed back the one RSRP and the RSRQs of the number acquired according to the RSRP to the base station.

Multiple manners for acquiring an RSRQ are available, and one of the realizable application scenarios is as follows: The second acquiring unit 91 calculates multiple RSRQs according to one acquired RSRP and multiple RSSIs, where the multiple RSSIs are obtained through measurement according to the measurement indication. The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in multiple RSSIs, and multiple RSRQs may be calculated according to multiple RSSIs and one RSRP, that is, multiple RSRQs are one-to-one corresponding to multiple RSSIs. That is not limited in the embodiment of the present invention.

Further, the UE may measure an RSRP and an RSSI on a CRS, and may also measure an RSRP and an RSSI on at least one CSI-RS resource according to an indication of the base station, or measure on one or more ports on a CSI-RS resource according to an indication of the base station. A specific measurement manner is selected by an operator according to an operation requirement in an actual application, which is not limited in the embodiment of the present invention.

It should be understood that, the foregoing application scenario is one of the manners for acquiring an RSRQ according to an RSRP, and in an actual application, another acquiring manner that may achieve the same effects is further included, which is not limited in the embodiment of the present invention.

Further, the configuration information acquired by the second acquiring unit 91 includes: the number of RSRQs that need to be correspondingly fed back when one RSRP is fed back and are to be acquired according to the RSRP, and the number of the RSRQs that need to be correspondingly fed back is at least one.

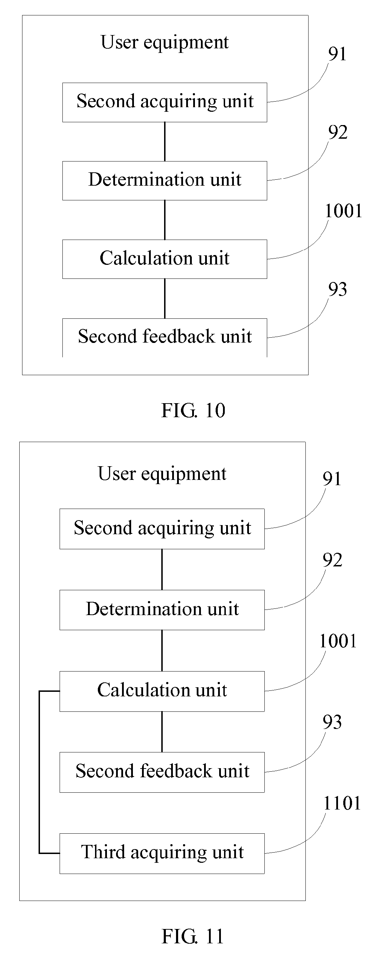

Further, as shown in FIG. 10, the UE further includes a calculation unit 1001.

The calculation unit 1001 is configured to obtain one RSRQ according to the one RSRP and each RSSI in the RSSIs of the number determined by the determination unit 92, so that the UE obtains the RSRQs of the number according to the one RSRP.

A calculation manner is to calculate the RSRQs of the number according to a calculation formula RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number.

The second feedback unit 93 is further configured to feed back the one RSRP and the RSRQs of the number obtained by the calculation unit 1001 according to the RSRP to the base station.

Further, as shown in FIG. 11, the UE further includes a third acquiring unit 1101.

The third acquiring unit 1101 is configured to acquire an RSRP, where the RSRP is obtained by the third acquiring unit 1101 through measurement on a CRS, or on a CSI-RS resource.

Further, the third acquiring unit 1101 is further configured to acquire an RSSI, where the RSSI is obtained by the third acquiring unit 1101 through measurement on a CRS, or on a CSI-RS resource.

Further, the configuration information acquired by the second acquiring unit 91 includes configuration information sent by the base station or predefined configuration information. The configuration information sent by the base station is explicitly noted configuration information or implicitly noted configuration information.

Types of the configuration information include: configuration information predefined in the UE and configuration information received by the second acquiring unit 91 from the base station. The configuration information received by the second acquiring unit 91 from the base station further includes explicitly noted configuration information or implicitly noted configuration information received from the base station. The explicitly noted configuration information may be the number of RSRQs that need to be fed back and correspond to an RSRP when the base station directly instructs the UE to feed back one RSRP. The implicitly noted configuration information may be information that is bound through a notification to the number of RSRQs that need to be fed back and correspond to an RSRP when one RSRP is fed back, where if the base station notifies such a type of information, the UE knows the number of RSRQs that need to be fed back and correspond to one RSRP when feeding back the one RSRP. In an actual application, the configuration information is not limited to the configuration information described in the foregoing, which is not limited in an actual application. Further, the configuration information may also exclude the number information, for example, may only include an absolute condition or a relative condition, which is not limited here.

The user equipment provided in the embodiment of the present invention can further feed back multiple RSRQs corresponding to one RSRP to the base station when feeding back the RSRQ. In the prior art, in one information feedback unit, when feeding back one RSRP, the UE can simultaneously feed back one RSRP at most, and the RSRQ can carry only one piece of RSSI information. When multiple pieces of RSRQ information or RSSI information are required, multiple corresponding pieces of RSRP information need to be calculated, so that multiple corresponding pieces of RSRQ information can be calculated and fed back, and more information feedback units are required. In the method in the embodiment of the present invention, it may be ensured that when one RSRP is fed back, multiple RSRQs corresponding to the RSRP are fed back, so that when one RSRP is fed back, multiple pieces of RSSI information or RSRQ information may be carried, thereby satisfying that the base station acquires, when only needing more RSSI information, required information whenmeasures only one RSRP at least, reducing calculation complexity of the UE, increasing flexibility of calculation and feedback of the UE, and better satisfying a new feedback requirement when the base station only needs more RSSI or RSRQ information and feedback overhead is limited.

### Embodiment 11

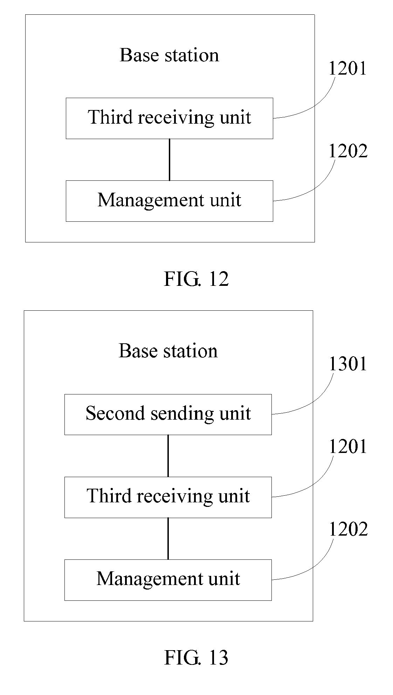

An embodiment of the present invention provides a base station. As shown in FIG. 12, the base station includes: a third receiving unit 1201 and a management unit 1202.

The third receiving unit 1201 is configured to receive one RSRP and at least one RSRQ acquired according to the one RSRP that are fed back by a UE.

Multiple manners are available for the UE to acquire an RSRQ according to one RSRP, and one of the realizable application scenarios is as follows:
The UE calculates multiple RSRQs according to one acquired RSRP and multiple RSSIs, where the multiple RSSIs are obtained through measurement according to a measurement indication. The calculation formula is RSRQ = RSRP * N/RSSI, that is, an RSRQ is equal to a ratio of an RSRP to an RSSI, multiplied by N. N is an adjustment coefficient that is introduced for adjusting an RSRP and an RSSI to correspond to the same bandwidth or REs of the same number. One RSRQ may be calculated according to one RSRP and any one RSSI in multiple RSSIs, and multiple RSRQs may be calculated according to multiple RSSIs and one RSRP, that is, multiple RSRQs are one-to-one corresponding to multiple RSSIs. That is not limited in the embodiment of the present invention.

It should be understood that, the foregoing application scenario is one of the manners for acquiring an RSRQ according to an RSRP, and in an actual application, another acquiring manner that may achieve the same effects is further included, which is not limited in the embodiment of the present invention.

Further, the UE may measure an RSRP and an RSSI on a CRS, and may also measure an RSRP and an RSSI on at least one CSI-RS resource according to an indication of the base station, or measure on one or more ports on a CSI-RS resource according to an indication of the base station. A specific measurement manner is selected by an operator according to an operation requirement in an actual application.

After acquiring one RSRP and multiple RSSIs, and calculating multiple RSRQs corresponding to the RSRP according to the one RSRP and multiple RSSIs, the UE feeds back the corresponding one RSRP and multiple RSRQs calculated according to the RSRP to the third receiving unit 1201.

In addition, when feeding back the corresponding RSRQs, the UE may further feed back information about a resource on which each RSRQ is acquired to the third receiving unit 1201. For example, when an RSRQ is calculated by using an RSRP and an RSSI, it may be fed back on which resource or which port of which resource the RSRP corresponding to one or more RSRQs is measured, and on which resource or which port of which resource an RSSI corresponding to each RSRQ in one or more RSRQs is measured.

The management unit 1202 is configured to perform radio resource management according to the one RSRP and the at least one RSRQ that are received by the third receiving unit 1201.

Further, the one RSRP and the at least one RSRQ that are received by the third receiving unit 1201 are fed back by the UE according to configuration information, where the configuration information may be configuration information predefined in the UE.

Alternatively, the configuration information may also be configuration information sent by the base station to the UE. In this case, as shown in FIG. 13, the base station further includes a second sending unit 1301.

The second sending unit 1301 is configured to send, before the third receiving unit 1201 receives the one RSRP and the at least one RSRQ acquired according to the RSRP that are fed back by the UE, the configuration information to the UE, where the configuration information includes explicitly noted configuration information or implicitly noted configuration information.

Further, the configuration information sent by the second sending unit 1301 includes: the number of RSRQs that need to be correspondingly fed back when one RSRP is fed back and are to be acquired according to the one RSRP, where the number of the RSRQs that need to be correspondingly fed back is at least one.

The configuration information is not limited to the number information, and may further include an absolute condition or a relative condition that needs to be satisfied by the RSRQ fed back. The absolute condition may be that an absolute value of the RSRQ fed back needs to satisfy a certain threshold. The relative condition may be that a relative value between several RSRQs satisfies a certain condition, for example, a difference or ratio between two RSRQs is higher than a certain threshold. In addition, time dimension may be further added, for example, an RSRQ satisfies the feedback condition and needs to be fed back only when the RSRQ keeps satisfying the absolute condition or relative condition in a certain time scope. The configuration information is not limited to the number information in the embodiment of the present invention. In an actual application, the configuration information may also exclude the number information, for example, may only include an absolute condition or a relative condition, which is not limited here.

The base station provided in the embodiment of the present invention can further receive multiple RSRQs corresponding to one RSRP and fed back by the UE when receiving the RSRP fed back by the UE. In the prior art, in one information feedback unit, when feeding back one RSRP, the UE can simultaneously feed back one RSRP at most, and the RSRQ can carry only one piece of RSSI information. When multiple pieces of RSRQ information or RSSI information are required, multiple corresponding pieces of RSRP information need to be calculated so that multiple corresponding pieces of RSRQ information can be calculated and fed back, and more information feedback units are required. In the method in the embodiment of the present invention, it may be ensured that when receiving one RSRP, the base station can further receive multiple RSRQs corresponding to the RSRP, so that when one RSRP is received, multiple pieces of RSSI information or RSRQ information may be received, thereby satisfying that the base station acquires, when only needing more RSSI information, required information whenmeasures only one RSRP at least, reducing calculation complexity of the UE, increasing flexibility of calculation and feedback of the UE, and better satisfying a new feedback requirement when the base station only needs more RSSI or RSRQ information and feedback overhead is limited.

It should be understood that, the technical solutions of the embodiments of the present invention may be applied to various communication systems, for example: a global system of mobile communication (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, LTE time division duplex (Time Division Duplex, TDD), a universal mobile telecommunication system (Universal Mobile Telecommunication System, UMTS) system, and a worldwide interoperability for microwave access (Worldwide Interoperability for Microwave Access, WiMAX) communications system.

It should be further understood that, in the embodiments of the present invention, a user equipment (User Equipment, UE) may be referred to as a terminal (Terminal), a mobile station (Mobile Station, MS), or a mobile terminal (Mobile Terminal), and may communicate with one or more core networks through a radio access network (Radio Access Network, RAN). For example, the user equipment may be a mobile phone (or be referred to as a "cellular" phone) or a computer with a mobile terminal, or may be a portable, pocket-sized, handheld, computer built-in, or vehicle-mounted mobile apparatus, which exchanges speech and/or data with the radio access network.

In the embodiments of the present invention, a base station may be a base station (Base Transceiver Station, BTS) in GSM or CDMA, a base station (NodeB, NB) in WCDMA, or a base station (Evolutional Node B, ENB or e-NodeB) in LTE, which is not limited in the present invention. For ease of description, the following embodiments are described by taking a base station eNB and a user equipment UE as examples.

Through the foregoing description of the embodiments, a person skilled in the art may clearly understand that the present invention may be implemented in a manner of software plus a necessary universal hardware platform, and certainly, may also be implemented by hardware; however, in most cases, the former is a preferred implemented manner. Based on such understanding, the technical solutions of the present invention or the part that makes contributions to the prior art can be substantially embodied in a form of a software product. The computer software product is stored in a readable storage medium, for example, a floppy disk, hard disk, or optical disc of the computer, and includes several instructions used to instruct a computer device (which may be a personal computer, a server, or a network device, or the like) to perform the method according to each embodiment of the present invention.

The foregoing descriptions is merely specific implementation manners of the present invention, but is not intended to limit the present invention. Any variation or replacement readily figured out by a person skilled in the art within the technical scope disclosed in the present invention shall fall within the scope of the present invention. Therefore, the protection scope of the present invention is subject to the appended claims.

## Claims

1. A method for measuring and feeding back radio resource management information, comprising:
receiving, by a user equipment UE, a measurement indication from a base station, wherein the measurement indication comprises: information used for indicating, to the UE, at least one channel-state information-reference signal CSI-RS resource used for measuring a received signal strength indicator RSSI;
acquiring, by the UE, at least one RSSI according to the measurement indication;
acquiring, by the UE, at least one reference signal received quality RSRQ according to the at least one RSSI, wherein the at least one RSRQ is one-to-one corresponding to the at least one RSSI; and
feeding back, by the UE, the at least one RSRQ to the base station.

2. The method according to claim 1, wherein the acquiring, by the UE, at least one RSSI according to the measurement indication comprises:
measuring, by the UE, at least one RSSI on each CSI-RS resource in the at least one CSI-RS resource, so as to acquire the at least one RSSI.

3. The method according to claim 1 or 2, wherein the measurement indication further comprises: information, used for indicating, to the UE, at least one port of the at least one CSI-RS resource for which an RSSI needs to be measured, and one CSI-RS resource at least comprises one port; and
the acquiring, by the UE, at least one RSSI according to the measurement indication comprises:
measuring, by the UE, an RSSI on the at least one port on the at least one CSI-RS resource according to the measurement indication.

4. The method according to any one of claims 1 to 3, wherein the acquiring, by the UE, at least one RSRQ according to the at least one RSSI comprises:
calculating, by the UE, one RSRQ according to each RSSI in the at least one RSSI and one reference signal received power RSRP acquired by the UE, so as to acquire the at least one RSRQ.

5. A method for measuring and feeding back radio resource management information, comprising:
sending, by a base station, a measurement indication to a user equipment UE, wherein the measurement indication comprises: information used for indicating, to the UE, at least one channel-state information-reference signal CSI-RS resource used for measuring a received signal strength indicator RSSI; and
receiving, by the base station, at least one reference signal received quality RSRQ fed back by the UE, wherein the RSRQ is acquired by the UE according to the measurement indication.

6. The method according to claim 5, wherein the measurement indication further comprises: information, used for indicating, to the UE, at least one port of the at least one CSI-RS resource for which an RSSI needs to be measured, and one CSI-RS resource at least comprises one port.

7. A method for measuring and feeding back radio resource management information, comprising:
acquiring, by a user equipment UE, configuration information;
determining, by the UE, according to the configuration information, the number of reference signal received qualities RSRQs that need to be correspondingly fed back when one reference signal received power RSRP is fed back and are to be acquired according to the one RSRP; and
feeding back, by the UE, the one RSRP and the RSRQs of the number acquired according to the one RSRP to the base station.

8. The method according to claim 7, wherein the configuration information comprises: the number of the RSRQs that need to be correspondingly fed back when one RSRP is fed back and are to be acquired according to the one RSRP, and the number of the RSRQs that need to be correspondingly fed back is at least one.

9. The method according to claim 7 or 8, wherein the feeding back, by the UE, the one RSRP and the RSRQs acquired according to the one RSRP to the base station comprises:
obtaining, by the UE, one RSRQ according to the one RSRP and each RSSI in the received signal strength indicators RSSIs of the number acquired by the UE, so that the UE obtains the RSRQs of the number according to the one RSRP; and
feeding back, by the UE, the one RSRP and the RSRQs of the number acquired according to the one RSRP to the base station.

10. The method according to any one of claims 7 to 9, wherein the RSRP is measured on a cell-specific reference signal CRS, or on a channel-state information-reference signal CSI-RS resource.

11. The method according to claim 9, wherein the RSSI is measured on a CRS, or on a CSI-RS resource.

12. The method according to any one of claims 7 to 11, wherein the configuration information comprises configuration information sent by the base station or predefined configuration information; and
the configuration information sent by the base station is explicitly noted configuration information or implicitly noted configuration information.

13. A method for measuring and feeding back radio resource management information, comprising:
receiving, by a base station, one reference signal received power RSRP and at least one reference signal received quality RSRQ acquired according to the one RSRP, which are fed back by a user equipment UE; and
performing, by the base station, radio resource management according to the one RSRP and the at least one RSRQ.

14. The method according to claim 13, wherein the one RSRP and the at least one RSRQ are fed back by the UE according to configuration information, and the configuration information is configuration information predefined in the UE.

15. The method according to claim 13, wherein the one RSRP and the at least one RSRQ are fed back by the UE according to configuration information;
the configuration information is sent by the base station to the UE; and
before the receiving, by a base station, one reference signal received power RSRP and at least one reference signal received quality RSRQ acquired according to the one RSRP, which are fed back by a user equipment UE, the method further comprises:
sending, by the base station, the configuration information to the UE, wherein the configuration information comprises explicitly noted configuration information or implicitly noted configuration information.

16. The method according to any one of claims 13 to 15, wherein the configuration information comprises: the number of the RSRQs that need to be correspondingly fed back when one RSRP is fed back and are to be acquired according to the one RSRP, and the number of the RSRQs that need to be correspondingly fed back is at least one.

17. A user equipment UE, comprising:
a first receiving unit, configured to receive a measurement indication from a base station, wherein the measurement indication comprises: information used for indicating, to the UE, at least one channel-state information-reference signal CSI-RS resource used for measuring a received signal strength indicator RSSI;
a first acquiring unit, configured to acquire at least one RSSI according to the measurement indication received by the first receiving unit, wherein
the first acquiring unit is further configured to acquire at least one reference signal received quality RSRQ according to the at least one RSSI, wherein the at least one RSRQ is one-to-one corresponding to the at least one RSSI; and
a first feedback unit, configured to feed back the at least one RSRQ acquired by the first acquiring unit to the base station.

18. The user equipment according to claim 17, wherein the first acquiring unit is specifically configured to measure at least one RSSI on each CSI-RS resource in the at least one CSI-RS resource, so as to acquire the at least one RSSI.

19. The user equipment according to claim 17 or 18, wherein the measurement indication received by the receiving unit further comprises: information, used for indicating, to the UE, at least one port of the at least one CSI-RS resource for which an RSSI needs to be measured, and one CSI-RS resource at least comprises one port; and
the first acquiring unit is further configured to measure an RSSI on the at least one port on the at least one CSI-RS resource according to the measurement indication.

20. The user equipment according to any one of claims 17 to 19, wherein the first acquiring unit is specifically configured to calculate one RSRQ according to each RSSI in the at least one RSSI and one reference signal received power RSRP acquired by the first acquiring unit, so as to acquire the at least one RSRQ.

21. Abase station, comprising:
a first sending unit, configured to send a measurement indication to a user equipment UE, wherein the measurement indication comprises: information used for indicating, to the UE, at least one channel-state information-reference signal CSI-RS resource used for measuring a received signal strength indicator RSSI; and
a second receiving unit, configured to receive at least one reference signal received quality RSRQ fed back by the UE, wherein the RSRQ is acquired by the UE according to the measurement indication.

22. The base station according to claim 21, wherein the measurement indication sent by the first sending unit further comprises: information, used for indicating, to the UE, at least one port of the at least one CSI-RS resource for which an RSSI needs to be measured, and one CSI-RS resource at least comprises one port.

23. A user equipment UE, comprising:
a second acquiring unit, configured to acquire configuration information;
a determination unit, configured to determine, according to the configuration information acquired by the second acquiring unit, the number of reference signal received qualities RSRQs that need to be correspondingly fed back when one reference signal received power RSRP is fed back and are to be acquired according to the one RSRP; and
a second feedback unit, configured to feed back the one RSRP and the RSRQs of the number acquired according to the one RSRP to the base station.

24. The user equipment according to claim 23, wherein the configuration information acquired by the second acquiring unit comprises: the number of the RSRQs that need to be correspondingly fed back when one RSRP is fed back and are to be acquired according to the one RSRP, and the number of the RSRQs that need to be correspondingly fed back is at least one.

25. The user equipment according to claim 23 or 24, further comprising:
a calculation unit, configured to obtain one RSRQ according to the one RSRP and each RSSI in the received signal strength indicators RSSIs of the number determined by the determination unit, so that the UE obtains the RSRQs of the number according to the one RSRP, wherein
the second feedback unit is further configured to feed back, to the base station, the one RSRP and the RSRQs of the number that is obtained by the calculation unit according to the one RSRP.

26. The user equipment according to any one of claims 23 to 25, further comprising:
a third acquiring unit, configured to acquire the RSRP, wherein the RSRP is obtained by the third acquiring unit through measurement on a cell-specific reference signal CRS, or on a channel-state information-reference signal CSI-RS resource.

27. The user equipment according to claim 25, wherein the third acquiring unit is further configured to acquire the RSSI, the RSSI is obtained by the third acquiring unit through measurement on a CRS, or on a CSI-RS resource.

28. The user equipment according to any one of claims 23 to 27, wherein the configuration information acquired by the second acquiring unit comprises configuration information sent by the base station or predefined configuration information; and
the configuration information sent by the base station is explicitly noted configuration information or implicitly noted configuration information.

29. Abase station, comprising:
a third receiving unit, configured to receive one reference signal received power RSRP and at least one reference signal received quality RSRQ acquired according to the one RSRP, which are fed back by a user equipment UE; and
a management unit, configured to perform radio resource management according to the one RSRP and the at least one RSRQ that are received by the third receiving unit.

30. The base station according to claim 29, wherein the one RSRP and the at least one RSRQ that are received by the third receiving unit are fed back by the UE according to configuration information, and the configuration information is configuration information predefined in the UE.

31. The base station according to claim 29, wherein the one RSRP and the at least one RSRQ that are received by the third receiving unit are fed back by the UE according to configuration information;
the configuration information is sent by the base station to the UE; and
the base station further comprises:
a second sending unit, configured to send, before the third receiving unit receives the one RSRP and the at least one RSRQ acquired according to the one RSRP that are fed back by the UE, the configuration information to the UE, wherein the configuration information comprises explicitly noted configuration information or implicitly noted configuration information.

32. The base station according to any one of claims 29 to 31, wherein the configuration information sent by the second sending unit comprises: the number of the RSRQs that need to be correspondingly fed back when one RSRP is fed back and are to be acquired according to the one RSRP, and the number of the RSRQs that need to be correspondingly fed back is at least one.
